# EUROPEAN PATENT SPECIFICATION

(11) **EP 1 791 205 B1**
(45) Date of publication and mention of the grant of the patent: **12.09.2012**
(21) Application number: 05112297.6
(22) Date of filing: 16.12.2005
(51) Int. Cl.: H01M 8/04

(54) **Apparatus for thermal simulation of a fuel cell**
Vorrichtung zur thermischen Simulation einer Brennstoffzelle
Apparail pour la simulation thermique d'une pile à combustible

(30) Priority: 24.11.2005 JP 2005338149
(43) Date of publication of application: 30.05.2007
(73) Proprietor: Atomic Energy Council - Institute of Nuclear Energy Research, Lungtan, Taoyuan, Taiwan (TW)
(72) Inventor: Tsai, Yu-Ching, No 11, Hemei st., Taiwan (CN); Chyou, Yau-Pin, 9F.-2, No.7, Taipei 114, Taiwan (CN)
(74) Representative: Beck, Michael Rudolf

(56) References cited:
- EP-A2- 1 465 274
- US-A- 4 683 177
- US-A1- 2005 079 401
- CHYOU Y-P ET AL: "Integrated thermal engineering analyses with heat transfer at periphery of planar solid oxide fuel cell", JOURNAL OF POWER SOURCES, ELSEVIER SA, CH, vol. 139, no. 1-2, 4 January 2005 (2005-01-04), pages 126-140, XP004694559, ISSN: 0378-7753, DOI: DOI:10.1016/J.JPOWSOUR.2004.07.001

## Description

### Field of the invention

The present invention relates to a thermal simulation apparatus; more particularly, it relates to running initial system integration tests of a solid oxide fuel cell (SOFC) with reduced costs by replacing the SOFC with the apparatus.

### Description of the Related Art

As the price of energy is increasing, energy expense has become a big issue in the world nowadays. Methods for improving energy utilization efficiency are surely the most instant solutions. As is well-known, a fuel cell generates electric power through electrochemical reaction of hydrogen and oxygen, whose power-generating efficiency possesses high potential to all kinds of power-generating technology, from a small electric power used in 3C products to a mega-watt-scaled electric power produced by a power plant. Among all kinds of fuel cells, SOFC shows the best efficiency. Yet, since it is run under a high temperature and the exhaust gas it produces is of high temperature too, it requires the most challenging technology among the fuel cells as well. And, as it is run under a temperature between 600 to 1000°C, the performance parameters of the coordinated peripheral components, such as a reformer, a sequential burner and heat exchangers, have to be carefully considered for a successful thermal system integration of fuel cell. In another word, it is truly a prerequisite to the peripheral components that they must be able to sustain high-temperature operations. Hence, an integration examination of a SOFC not only requires a complete matching analysis; but also a down-to-earth experiment is essential.

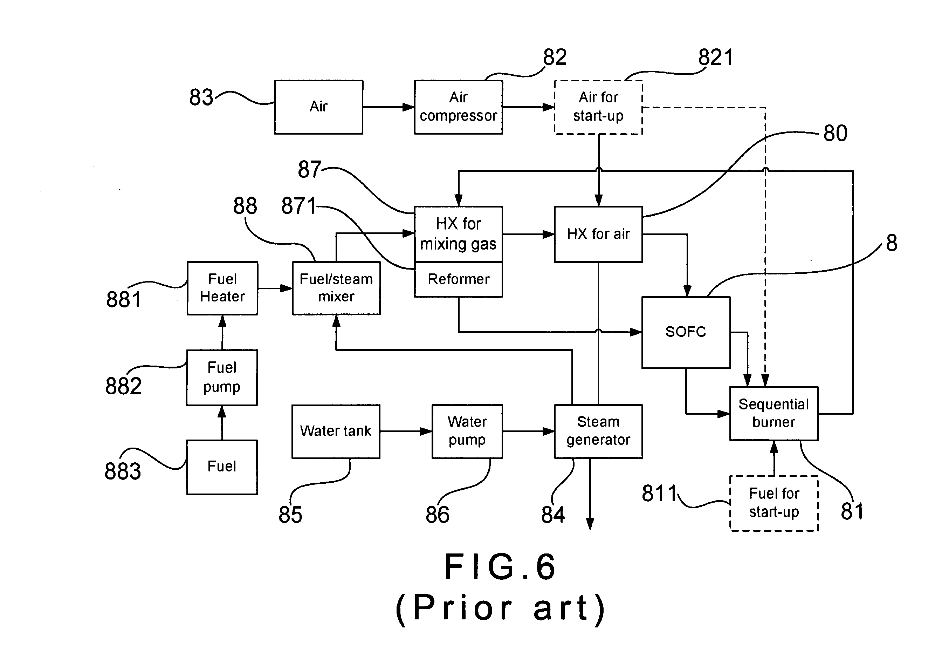

A disposition of a complete SOFC system of a prior art, as shown in FIG.6, comprises a SOFC 8; a heat exchanger for air flow 80 connecting to the SOFC 8; a sequential burner 81 connecting to the SOFC while having a fuel flow for start-up 811; an air compressor 82 compressing air 83 to supply an air for start-up 821 to the heat exchanger for air flow 80 and the sequential burner 81; a steam generator 84 connecting to the heat exchanger for air flow 80; a water tank 85 supplying water to the steam generator 84 by using a water pump 86; a heat exchanger for mixing gas 87 connecting respectively to the SOFC 8, the heat exchanger for air flow 80 and the sequential burner 81, coordinated with a reformer 871; a fuel/steam mixer 88 connecting to the steam generator 84 and the heat exchanger for mixing gas 87 and connecting to a fuel heater 881 supplying a fuel 883 by using a fuel pump 882.

Nevertheless, a SOFC costs high and its structure is not strong, even weak with its main body, it does not sustain a severe operation or environment. Obviously, owing to its high cost, when the environment has a somewhat big change, a high loss might happen, which is not suitable in initial system integration tests. Hence, the prior art does not fulfill users' requests on actual use.

A thermal simulator for thermal simulation of fuel cell comprising the features of the preamble portion of claim 1 is known from US 2005/0079401 A1.

### Summary of the invention

The main purpose of the present invention is to test a sequential burner, a heat exchanger and/or other component by using a pre-heater and a simulation burner coordinated with a steam boiler, an air compressor, a gas supplier, a mixer and a reformer, where a SOFC is replaced to save costs when running initial system integration tests of the SOFC.

To achieve the above purpose, the present invention is an apparatus for a thermal simulation of fuel cell, comprising a pre-heater heating an air flow passing by; and a simulation burner respectively located at an end of the pre-heater burning a fuel to raise the temperature of the air flow and to obtain another air flow having required components, coordinated with a steam boiler, an air compressor, a gas supplier, a mixer and a reformer, where a sequential burner, a heat exchanger or other component is tested. Accordingly, a novel apparatus for a thermal simulation of fuel cell is obtained.

### Brief descriptions of the drawings

The present invention will be better understood from the following detailed descriptions of the preferred embodiments according to the present invention, taken in conjunction with the accompanying drawings, in which
- FIG.1: is an explosive view showing a fundamental structure of a first preferred embodiment according to the present invention;
- FIG.2: is a block view showing a flow chart according to a second preferred embodiment of the present invention;
- **FIG.3**: is a block view showing a flow chart according to a third preferred embodiment of the present invention: and
- **FIG.4**: is a block view showing a flow chart according to a fourth preferred embodiment of the present invention;
- **FIG.5**: is a block view showing a flow chart according to a fifth preferred embodiment of the present invention;
- **FIG.6**: is a disposition block view of a prior art.

### Description of preferred embodiments

The following description of the preferred embodiments are provided to understand the features and the structures of the present invention.

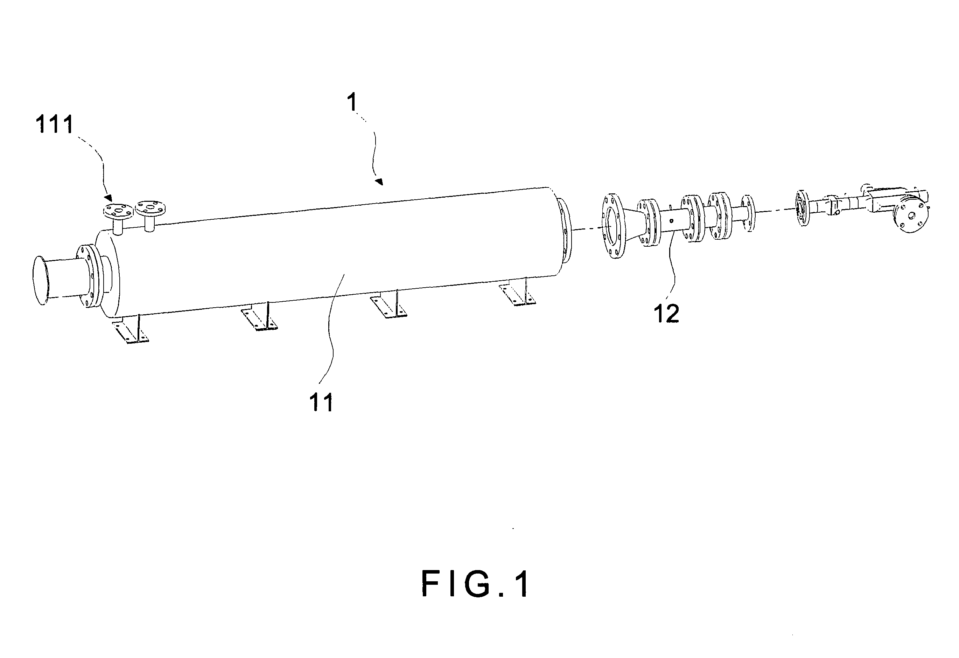

Please refer to FIG.1, which is an explosive view showing a fundamental structure of a first preferred embodiment according to the present invention. As shown in the figure, the present invention is an apparatus for a thermal simulation of fuel cell, where a thermal simulator 1 comprises a pre-heater 11 and a simulation burner 12; and the thermal simulator 1 plays a role as a solid oxide fuel cell (SOFC) where a component is tested with saved costs in initial system integration tests of the SOFC.

The pre-heater 11 heats an air flow passing by until a predestined temperature between 400 and 600°C (Celsius degree) to supply heat so that a required temperature is obtained at an end of the simulation burner 12; the pre-heater 11 heats the air flow with an electric heater; and a plurality of inlet pipes 111 are deposed on the pre-heater 11.

The simulation burner 12 is located at an end of the pre-heater 11 to produce an air flow simulating which is outputted from a sequential burner, a heat exchanger or other component; and the simulation burner 12 raises temperature of the air flow by burning a fuel.

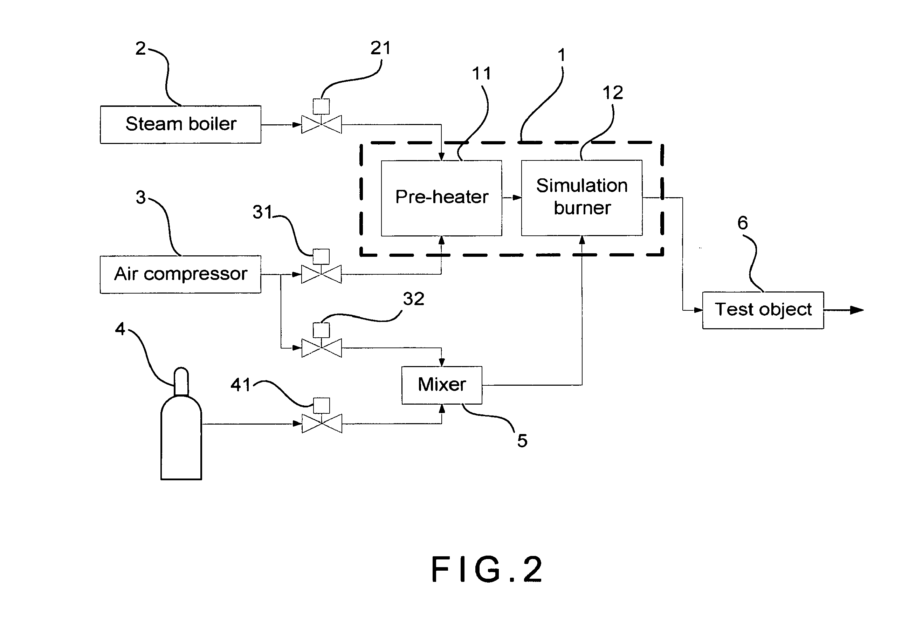

Please refer to FIG.2, which is a block view showing a flow chart according to a second preferred embodiment of the present invention. As shown in the figure, when using the present invention, a test object 6 of a heat exchanger is tested by using a thermal simulator 1 comprising a pre-heater 11 and a simulation burner, coordinated with a steam boiler 2, an air compressor 3, a gas supplier 4 and a mixer 5.

The pre-heater 11 heats an air flow passing by until a predestined temperature between 400 and 600°C to supply heat so that a required temperature is obtained at an end of the simulation burner 12.

The simulation burner 12 is located at an end of the pre-heater 11 to produce an air flow simulating which is outputted from a heat exchanger; and the simulation burner 12 raises temperature of the air flow by burning a fuel.

The steam boiler 2 is connected with the pre-heater 11 to provide a required steam flow for the thermal simulator 1 so that a steam amount at an output of a heat exchanger is simulated; and a mass flow controller (MFC) 21 is located between the steam boiler 2 and the pre-heater 11.

The air compressor 3 is connected with the pre-heater 11 to provide required compressed air; and an MFC 31 is located between the air compressor 3 and the pre-heater 11.

The gas supplier 4 is connected with the simulation burner 12; the gas supplier 4 is a steel cylinder to provide a methane (CH₄) or a natural gas; and an MFC 41 is located between the gas supplier 4 and the simulation burner 12.

The mixer 5 is connected to the gas supplier 4, the air compressor 3 and the simulation burner to mix airs; and an MFC 32 is located between the air compressor 3 and the mixer 5.

The test object 6 is connected with the simulation burner 12.

In the second preferred embodiment here, the test object 6 is a heat exchanger located downstream to the simulation burner 12 to recycle the thermal energy at an output of the simulation burner 12. Hence, the performance of the test object 6 is tested with the simulation burner 12 by simulating the gas outputted from a sequential burner. Because the output gas from a sequential burner is the same as that from burning a methane in air (only where the air is excessively supplied) yet the temperature obtained is higher than that obtained from purely burning the methane in air (which is a characteristic of SOFC), heat is supplied by using the pre-heater 11 to obtain required temperature when a sequential burner is simulated with the simulation burner 12.

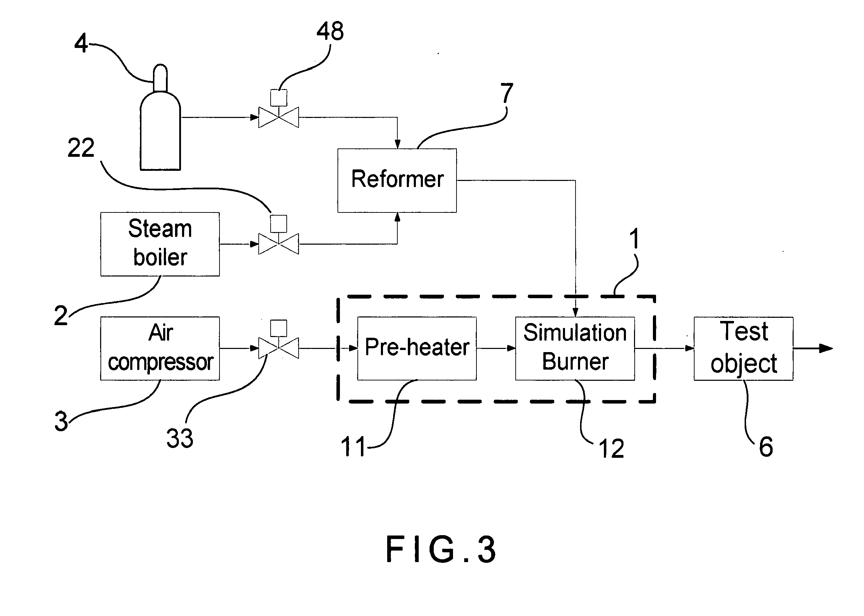

Please refer to FIG.3, which is a block view showing a flow chart according to a third preferred embodiment of the present invention. As shown in the figure, when using the present invention, a test object 6 other than a sequential burner, such as a heat exchanger, is tested by using a thermal simulator 1 comprising a pre-heater 11 and a simulation burner, coordinated with a reformer 7, a steam boiler 2, an air compressor 3 and a gas supplier 4.

The pre-heater 11 heats an air flow passing by until a predestined temperature between 400 and 600°C to supply heat so that a required temperature is obtained at an end of the simulation burner 12.

The simulation burner 12 is located at an end of the pre-heater 11 to produce an air flow simulating which is outputted from a component other than a sequential burner, such as a heat exchanger; and the simulation burner 12 raises temperature of the air flow by burning a fuel.

The reformer 7 is connected with the first simulation burner 12 to reform a hydrocarbon fuel to be rich in hydrogen.

The steam boiler 2 is connected with the reformer 7 to provide a required steam flow for the reformer 7; and an MFC 22 is located between the steam boiler 2 and the reformer 7.

The gas supplier 4 is connected with the reformer 7; the gas supplier 4 is a steel cylinder to provide a methane or a natural gas; and an MFC 48 is located between the gas supplier 4 and the reformer 7.

The air compressor 3 is connected with the pre-heater 11 to provide required compressed air; and an MFC 33 is located between the air compressor 3 and the pre-heater 11.

The test object 6 is connected with the simulation burner 12.

The third preferred embodiment can be regarded as an extension of the second preferred embodiment, where a fuel flow and a steam flow are supplied by a reformer 7. Thus, a component other than a sequential burner can be tested.

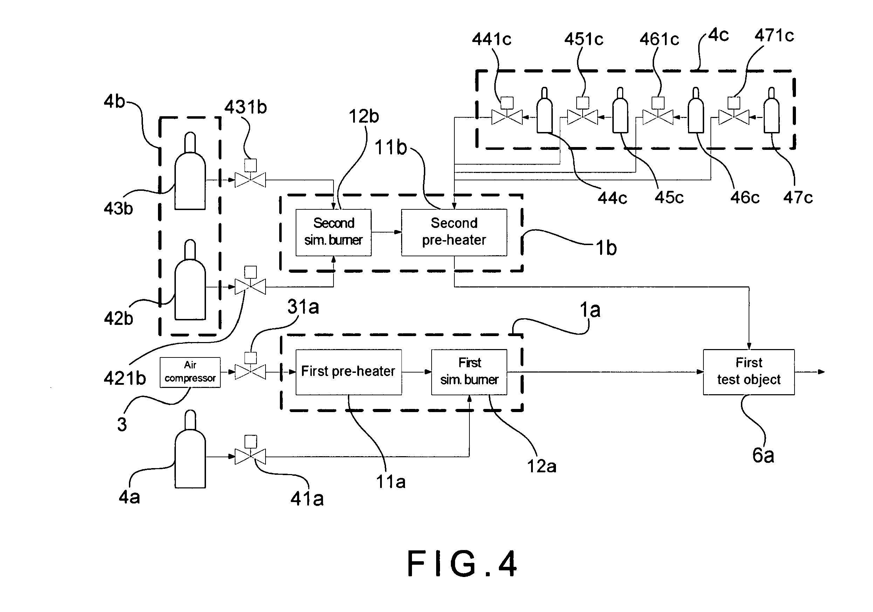

Please refer to FIG.4, which is a block view showing a flow chart according to a fourth preferred embodiment of the present invention. As shown in the figure, a first test object 6a of a sequential burner is tested by using a first thermal simulator 1a, comprising a first pre-heater 11a and a first simulation burner 12a, and a second thermal simulator 1b, comprising a second pre-heater 11b and a second simulation burner 12b, coordinated with an air compressor 3, a first gas supplier 4a, a second gas supplier 4b and a third gas supplier 4c.

The first pre-heater 11a and the second pre-heater 11b heat a first and a second air flows passing by to a predestined temperature between 400 and 600°C to supply heat so that a required temperature is obtained at each end of the first simulation burner 12a and the second simulation burner 12b respectively.

The first simulation burner 12a is located at an end of the first pre-heater 11a to produce a first air flow simulating which is outputted from a cathode of a SOFC; and the first simulation burner 12a raises temperature of the first air flow by burning a fuel.

The second simulation burner 12b is located at an end of the second pre-heater 11b to produce a second air flow simulating which is outputted from an anode of the SOFC; and the second simulation burner 12b raises temperature of the second air flow by burning a fuel.

The air compressor 3 is connected with the first pre-heater 11a to provide required compressed air; and an MFC 31a is located between the air compressor 3 and the first pre-heater 11a.

The first gas supplier 4a is connected with the first simulation burner 12a; the first gas supplier 4a is a steel cylinder to provide a methane or hydrogen (H₂); and an MFC 41a is located between the first gas supplier 4a and the first simulation burner 12a.

The second gas supplier 4a is connected with the second simulation burner 12a; the second gas supplier 4a comprises steel cylinders 42b,43b to provide hydrogen (H₂) and oxygen (O₂); and an MFC 421b,431b is located between each steel cylinder 42b,43b and the second simulation burner 12b.

The third gas supplier 4c is connected with the second pre-heater 11b; the third gas supplier 4c comprises steel cylinders 44c,45c,46c,47c to provide a methane, hydrogen, carbon monoxide (CO) and carbon dioxide (CO₂); and an MFC 441c,451c,461c,471c is located between each steel cylinder 44c,45c,46c,47c and the second pre-heater 11b.

The first test object 6a is connected with the first simulation burner 12a and the second pre-heater 11b.

The output at a cathode of the SOFC is an air with high temperature, which comprises less oxygen than regular air after passing through an anode and a solid electrolyte. Therefore, when the first thermal simulator 1a is used to simulate the cathode of the SOFC, some oxygen in the air is consumed by a burning with some adequate fuel added to the first simulation burner 12a so that a required oxygen amount in the output of the cathode of the SOFC is simulated. Although the burning produces CO₂ and H₂O, their amounts are so tiny that they almost do nothing to the sequential burner. Besides, the temperature of the air is also raised by the burning so that the power required by the first pre-heater 11a is reduced. Regarding the output air at the anode of the SOFC, the output air may comprises H₂, CH₄, CO, CO₂ and H₂O, where H₂O takes the most part, and H₂ and CO₂ follows. Thus, a second thermal simulator 1b is used to simulate the cathode of the SOFC by a burning of H₂ and O₂ in the second thermal simulator 1b so that a required amount of H₂O is obtained and the power required by the second pre-heater 1b is reduced. The other components of the fuel are sent to the second pre-heater 11b through the MFCs 441c,451c,461c,471c of the third gas supplier 4c to be mixed with the output air flow from the second simulation burner. Thus, the output air at the anode of the SOFC is obtained.

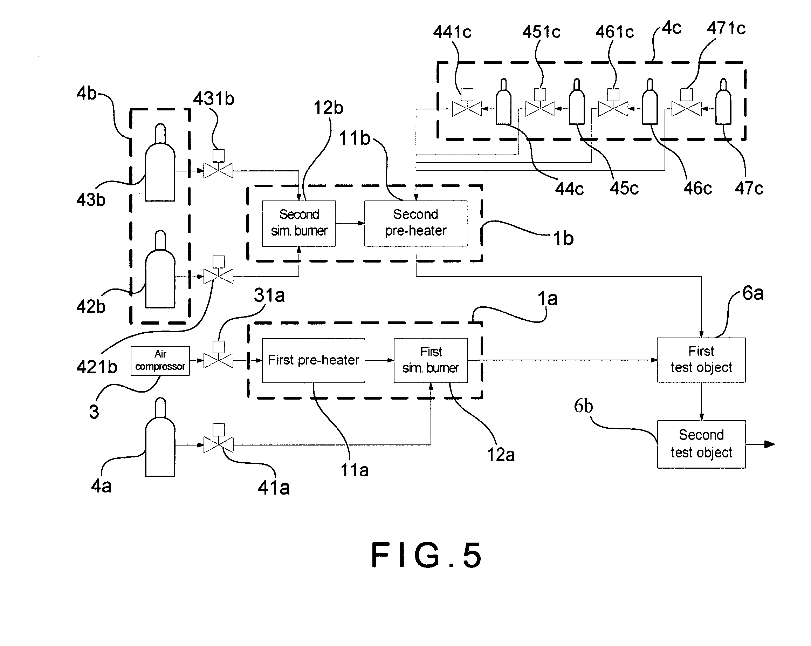

Please further refer to FIG.5, which is a block view showing a flow chart according to a fifth preferred embodiment of the present invention. As shown in the figure, two connected test objects are located downstream to the first simulation burner 12a, which comprises a first test object 6a of a sequential burner and a second test object 6b of a heat exchanger. By doing so, the first test object 6a and the second test object 6b are tested simultaneously.

To sum up, the present invention is an apparatus for a thermal simulation of fuel cell, where a sequential burner, a heat exchanger or other component is tested by using a pre-heater and a simulation burner coordinated with a steam boiler, an air compressor, a gas supplier, a mixer and a reformer. Consequently, a SOFC can be replaced with the apparatus when running initial system integration tests of the SOFC.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. Thermal simulator (1) for the thermal simulation of a fuel cell, wherein the fuel cell is replaced by said thermal simulator, said thermal simulator (1) comprising:
at least a pre-heater (11) heating a flow passing by, the flow being selected from an air flow and a steam flow;
**characterized by**
at least a simulation burner (12) located at an end of the pre-heater (11) to raise temperature of the air flow by burning a fuel and to obtain another air flow having predestined elements.

2. Thermal simulator according to claim 1, wherein the pre-heater (11) heats the air flow with an electric heater.

3. Thermal simulator according to claim 1 or 2, wherein a plurality of inlet pipes (111) are deposed on the pre-heater (11).

4. Apparatus, comprising a thermal simulator (1) according to claim 1 wherein the at least one pre-heater comprises a pre-heater (11) heating an air flow passing by, **characterized by**
a steam boiler (2) connecting to the pre-heater (11) to provide steam;
an air compressor (3) connecting to the pre-heater (11) and the simulation burner (12) to provide compressed air;
a gas supplier (4) connecting to the simulation burner (12);
a mixer (5) connecting to the gas supplier, the air compressor and the simulation burner, the mixer mixing airs from the gas supplier and the air compressor and delivering the mixture to the simulation burner; and
a test object (6) connecting to the simulation burner (12).

5. Apparatus according to claim 4, wherein the gas supplier (4) comprises a steel cylinder providing a gas selected from a group consisting of a methane (CH₄) and a natural gas.

6. Apparatus according to claim 4 or 5, wherein the test object (6) is a heat exchanger.

7. Apparatus according to one of claim 4 to 6,
wherein a mass flow controller (MFC) is located between the steam boiler (2) and the pre-heater (11);
wherein an MFC is located between the air compressor and the pre-heater;
wherein an MFC is located between the air compressor and the mixer; and
wherein an MFC is located between the gas supplier and the mixer.

8. Apparatus according to one of claims 4 to 7,
wherein the mixer is a reformer (7), the reformer connecting to the gas supplier (4) and the steam boiler (2) at an end, the reformer connecting to the simulation burner (12) at another end, the reformer reforming air into an air containing hydrogen;
wherein the steam boiler (2) connects to the reformer to provide a steam flow for the reformer; and
wherein the gas supplier (4) connects to the reformer, the gas supplier comprising a steel cylinder providing methane.

9. Apparatus according to claim 8,
wherein an MFC is located between the steam boiler (2) and the reformer (7); and
wherein an MFC is located between the gas supplier (4) and the reformer (7).

10. Apparatus comprising two thermal simulators (1) of claim 1, wherein
a first thermal simulator (1a) comprises a first pre-heater (11a) heating a first air flow passing by and a first simulation burner (12a) located at an end of the first pre-heater to raise temperature of the first air flow and to obtain an air flow having predestined components, and
a second thermal simulator (1b) comprises a second pre-heater (11b) heating a second air flow passing by anda second simulation burner (12b) located at an end of the second pre-heater to raise temperature of the second air flow and to obtain an air flow having predestined components,
**characterized by**
an air compressor (421b) connecting to the first pre-heater to provide a compressed air;
a first gas supplier (4a) connecting to the first simulation burner;
a second gas supplier (4b) connecting to the second simulation burner;
a third gas supplier connecting to the second pre-heater: and
a test object (6a, 6b) connecting to the first simulation burner and the second pre-heater.

11. Apparatus according to claim 10, wherein the first gas supplier (4a) comprises a steel cylinder providing a gas selected from a group consisting of a methane and hydrogen.

12. Apparatus according to claim 10 or 11, wherein the second gas supplier (4b) comprises steel cylinders providing hydrogen (H₂) and oxygen (O₂).

13. Apparatus according to one of claims 10 to 12, wherein the third gas supplier comprises steel cylinders providing a methane, hydrogen, carbon monoxide (CO) and carbon dioxide (CO₂).

14. Apparatus according to one of claims 10 to 13, wherein the test object (6a, 6b) is a sequential burner.

15. Apparatus according to one of claims 10 to 13, wherein the test object (6a, 6b) is a sequential burner connected with a heat exchanger.

16. Apparatus according to one of claims 10 to 15,
wherein an MFC is located between the air compressor and the first pre-heater;
wherein an MFC is located between the first gas supplier and the first simulation burner;
wherein an MFC is located between each steel cylinder of the second gas supplier and the second simulation burner; and
wherein an MFC is located between each steel cylinder of the third gas supplier and the second simulation burner.

## Patentansprüche

1. Thermischer Simulator (1) zur thermischen Simulation einer Brennstoffzelle, wobei die Brennstoffzelle durch den thermischen Simulator ersetzt wird und der thermische Simulator (1) umfasst:
mindestens einen Vorwärmer (11), der einen vorbeiströmenden Strom erwärmt, wobei der Strom aus einem Luftstrom und einem Dampfstrom ausgewählt ist;
**gekennzeichnet durch**
mindestens einen Simulationsbrenner (12), der an einem Ende des Vorwärmers (11) angeordnet ist, um die Temperatur des Luftstroms **durch** Verbrennen eines Brennstoffs anzuheben und einen weiteren Luftstrom zu erhalten, der vorgegebene Elemente aufweist.

2. Thermischer Simulator nach Anspruch 1, wobei der Vorwärmer (11) den Luftstrom mithilfe eines elektrischen Heizers erwärmt.

3. Thermischer Simulator nach Anspruch 1 oder 2, wobei eine Vielzahl von Ansaugrohren (111) an dem Vorwärmer (11) angeordnet ist.

4. Vorrichtung, die einen thermischen Simulator (1) nach Anspruch 1 umfasst, wobei der mindestens eine Vorwärmer einen Vorwärmer (11) umfasst, der einen vorbeiströmenden Luftstrom erwärmt, **gekennzeichnet durch**
einen Dampfkessel (2), der an den Vorwärmer (11) angeschlossen ist, um Dampf bereitzustellen;
einen Luftkompressor (3), der an den Vorwärmer (11) und den Simulationsbrenner (12) angeschlossen ist, um Druckluft bereitzustellen;
eine Gaszufuhr (4), die an den Simulationsbrenner (12) angeschlossen ist;
einen Mischer (5), der an die Gaszufuhr, den Luftkompressor und den Simulationsbrenner angeschlossen ist, wobei der Mischer die Luft aus der Gaszufuhr und dem Luftkompressor mischt und das Gemisch an den Simulationsbrenner liefert; und
ein Testobjekt (6), das an den Simulationsbrenner (12) angeschlossen ist.

5. Vorrichtung nach Anspruch 4, wobei die Gaszufuhr (4) einen Stahlzylinder umfasst, der ein Gas bereitstellt, das aus der Gruppe bestehend aus Methangas (CH₄) und Erdgas ausgewählt ist.

6. Vorrichtung nach Anspruch 4 oder 5, wobei das Testobjekt (6) ein Wärmetauscher ist.

7. Vorrichtung nach einem der Ansprüche 4 bis 6,
wobei ein Mengenregler (MFC) zwischen dem Dampfkessel (2) und dem Vorwärmer (11) angeordnet ist;
wobei ein Mengenregler (MFC) zwischen dem Luftkompressor und dem Vorwärmer angeordnet ist;
wobei ein Mengenregler (MFC) zwischen dem Luftkompressor und dem Mischer angeordnet ist; und
wobei ein Mengenregler (MFC) zwischen der Gaszufuhr und dem Mischer angeordnet ist.

8. Vorrichtung nach einem der Ansprüche 4 bis 7,
wobei der Mischer ein Reformer (7) ist, der Reformer an einem Ende an die Gaszufuhr (4) und den Dampfkessel (2) angeschlossen ist, der Reformer am anderen Ende an den Simulationsbrenner (12) angeschlossen ist, und der Reformer Luft in einen luftenthaltenden Wasserstoff reformiert;
wobei der Dampfkessel (2) an den Reformer angeschlossen ist, um einen Dampfstrom für den Reformer bereitzustellen; und
wobei die Gaszufuhr (4) an den Reformer angeschlossen ist und die Gaszufuhr einen Stahlzylinder umfasst, der Methan bereitstellt.

9. Vorrichtung nach Anspruch 8,
wobei ein Mengenregler (MFC) zwischen dem Dampfkessel (2) und dem Reformer (7) angeordnet ist; und
wobei ein Mengenregler (MFC) zwischen der Gaszufuhr (4) und dem Reformer (7) angeordnet ist.

10. Vorrichtung, umfassend zwei thermische Simulatoren (1) nach Anspruch 1, wobei
ein erster thermischer Simulator (1a) einen ersten Vorwärmer (11a) umfasst, der einen ersten vorbeiströmenden Luftstrom erwärmt, und einen ersten Simulationsbrenner (12a), der an einem Ende des ersten Vorwärmers angeordnet ist, damit die Temperatur des ersten Luftstroms angehoben und ein Luftstrom erhalten wird, der vorgegebene Komponenten aufweist, und
ein zweiter thermischer Simulator (1b) einen zweiten Vorwärmer (11b) umfasst, der einen zweiten vorbeiströmenden Luftstrom erwärmt, und einen zweiten Simulationsbrenner (12b), der an einem Ende des zweiten Vorwärmers angeordnet ist, damit die Temperatur des zweiten Luftstroms angehoben und ein Luftstrom erhalten wird, der vorgegebene Komponenten aufweist,
**gekennzeichnet durch**
einen Luftkompressor (421b), der an den ersten Vorwärmer angeschlossen ist, um Druckluft bereitzustellen;
eine erste Gaszufuhr (4a), die an den ersten Simulationsbrenner angeschlossen ist;
eine zweite Gaszufuhr (4b), die an den zweiten Simulationsbrenner angeschlossen ist;
eine dritte Gaszufuhr, die an den zweiten Vorwärmer angeschlossen ist; und
ein Testobjekt (6a, 6b), das an den ersten Simulationsbrenner und den zweiten Vorwärmer angeschlossen ist.

11. Vorrichtung nach Anspruch 10, wobei die erste Gaszufuhr (4a) einen Stahlzylinder umfasst, der ein Gas bereitstellt, das aus der Gruppe bestehend aus Methangas und Wasserstoff gewählt ist.

12. Vorrichtung nach Anspruch 10 oder 11, wobei die zweite Gaszufuhr (4b) Stahlzylinder umfasst, die Wasserstoff (H₂) und Sauerstoff (O₂) bereitstellen.

13. Vorrichtung nach einem der Ansprüche 10 bis 12, wobei die dritte Gaszufuhr Stahlzylinder umfasst, die Methan, Wasserstoff, Kohlenmonoxid (CO) und Kohlendioxid (CO₂) bereitstellen.

14. Vorrichtung nach einem der Ansprüche 10 bis 13, wobei das Testobjekt (6a, 6b) ein sequentieller Brenner ist.

15. Vorrichtung nach einem der Ansprüche 10 bis 13, wobei das Testobjekt (6a, 6b) ein sequentieller Brenner ist, der an einen Wärmetauscher angeschlossen ist.

16. Vorrichtung nach einem der Ansprüche 10 bis 15,
wobei ein Mengenregler (MFC) zwischen dem Luftkompressor und dem ersten Vorwärmer angeordnet ist;
wobei ein Mengenregler (MFC) zwischen der ersten Gaszufuhr und dem ersten Simulationsbrenner angeordnet ist.
wobei ein Mengenregler (MFC) zwischen jedem Stahlzylinder der zweiten Gaszufuhr und dem zweiten Simulationsbrenner angeordnet ist; und
wobei ein Mengenregler (MFC) zwischen jedem Stahlzylinder der dritten Gaszufuhr und dem zweiten Simulationsbrenner angeordnet ist.

## Revendications

1. Simulateur thermique (1) pour la simulation thermique d'une pile à combustible, la pile à combustible étant remplacée par ledit simulateur thermique, ledit simulateur thermique (1) comprenant :
au moins un préchauffeur (11) qui chauffe un flux qui passe, le flux étant sélectionné parmi un flux d'air et un flux de vapeur,
**caractérisé par**
au moins un brûleur de simulation (12) situé à une extrémité du préchauffeur (11) pour augmenter la température du flux d'air en brûlant un combustible et pour obtenir un autre flux d'air ayant des éléments prédestinés.

2. Simulateur thermique selon la revendication 1 dans lequel le préchauffeur (11) chauffe le flux d'air avec un dispositif de chauffage électrique.

3. Simulateur thermique selon la revendication 1 ou 2 dans lequel une pluralité de tuyaux d'admission (111) est déposée sur le préchauffeur (11).

4. Appareil comprenant un simulateur thermique (1) selon la revendication 1 dans lequel le préchauffeur qui existe au moins comprend un préchauffeur (11) qui chauffe un flux d'air qui passe, **caractérisé par** :
une chaudière à vapeur (2) reliée au préchauffeur (11) pour procurer de la vapeur ;
un compresseur d'air (3) relié au préchauffeur (11) et au brûleur de simulation (12) pour procurer de l'air comprimé ;
un fournisseur de gaz (4) relié au brûleur de simulation (12) ;
un mélangeur (5) relié au fournisseur de gaz, au compresseur d'air et au brûleur de simulation, le mélangeur mélangeant l'air du fournisseur de gaz et du compresseur d'air et qui livre le mélange au brûleur de simulation et
un objet à tester (6) relié au brûleur de simulation (12).

5. Appareil selon la revendication 4 dans lequel le fournisseur de gaz (4) comprend un cylindre d'acier procurant un gaz sélectionné dans un groupe comprenant un méthane (CH₄) et un gaz naturel.

6. Appareil selon la revendication 4 ou 5 dans lequel l'objet à tester (6) est un échangeur thermique.

7. Appareil selon l'une des revendications 4 à 6 dans lequel un contrôleur de débit massique (MFC) est situé entre la chaudière à vapeur (2) et le préchauffeur (11), dans lequel un contrôleur de débit massique (MFC) est situé entre le compresseur d'air et le préchauffeur, dans lequel un contrôleur de débit massique (MFC) est situé entre le compresseur d'air et le mélangeur et dans lequel un contrôleur de débit massique (MFC) est situé entre le fournisseur de gaz et le mélangeur.

8. Appareil selon l'une des revendications 4 à 7 dans lequel le mélangeur est un reformeur (7), le reformeur étant relié au fournisseur de gaz (4) et à la chaudière à vapeur (2) à une extrémité, le reformeur étant relié au brûleur de simulation (12) à une autre extrémité, le reformeur reformant de l'air en air contenant de l'hydrogène, dans lequel la chaudière à vapeur (2) est reliée au reformeur pour fournir un flux de vapeur au reformeur et dans lequel le fournisseur de gaz (4) est relié au reformeur, le fournisseur de gaz comprenant un cylindre d'acier procurant du méthane.

9. Appareil selon la revendication 8 dans lequel un contrôleur de débit massique (MFC) est situé entre la chaudière à vapeur (2) et le reformeur (7) et dans lequel un contrôleur de débit massique (MFC) est situé entre le fournisseur de gaz (4) et le reformeur (7).

10. Appareil comprenant deux simulateurs thermiques (1) selon la revendication 1 dans lequel un premier simulateur thermique (1a) comprend un premier préchauffeur (11a) chauffant un premier flux d'air qui passe et un premier brûleur de simulation (12a) situé à une extrémité du premier préchauffeur pour augmenter la température du premier flux d'air et pour obtenir un flux d'air qui a des composants prédestinés et un second simulateur thermique (1b) comprend un second préchauffeur (11b) qui chauffe un second flux d'air qui passe et un second brûleur de simulation (12b) situé à une extrémité du second préchauffeur pour augmenter la température du second flux d'air et pour obtenir un flux d'air qui a des composants prédestinés,
**caractérisé par**
un compresseur d'air (421b) relié au premier préchauffeur pour procurer de l'air compressé,
un premier fournisseur de gaz (4a) relié au premier brûleur de simulation,
un second fournisseur de gaz (4b) relié au second brûleur de simulation,
un troisième fournisseur de gaz relié au second préchauffeur et
un objet à tester (6a, 6b) relié au premier brûleur de simulation et au second préchauffeur.

11. Appareil selon la revendication 10 dans lequel le premier fournisseur de gaz (4a) comprend un cylindre d'acier qui procure un gaz sélectionné dans un groupe comprenant un méthane et de l'hydrogène.

12. Appareil selon la revendication 10 ou 11 dans lequel le second fournisseur de gaz (4b) comprend des cylindres d'acier procurant de l'hydrogène (H₂) et de l'oxygène (O₂).

13. Appareil selon l'une des revendications 10 à 12 dans lequel le troisième fournisseur de gaz comprend des cylindres d'acier qui procurent un méthane, de l'hydrogène, du monoxyde de carbone (CO) et du dioxyde de carbone (CO₂).

14. Appareil selon l'une des revendications 10 à 13 dans lequel l'objet à tester (6a, 6b) est un brûleur séquentiel.

15. Appareil selon l'une des revendications 10 à 13 dans lequel l'objet à tester (6a, 6b) est un brûleur séquentiel lié à un échangeur thermique.

16. Appareil selon l'une des revendications 10 à 15 dans lequel un contrôleur de débit massique (MFC) est situé entre le compresseur d'air et le premier préchauffeur, dans lequel un contrôleur de débit massique (MFC) est situé entre le premier fournisseur de gaz et le premier brûleur de simulation, dans lequel un contrôleur de débit massique (MFC) est situé entre chaque cylindre d'acier du second fournisseur de gaz et le second brûleur de simulation et un contrôleur de débit massique (MFC) est situé entre chaque cylindre d'acier du troisième fournisseur de gaz et le second brûleur de simulation.
